# EUROPEAN PATENT SPECIFICATION

(11) **EP 4 211 421 B1**
(45) Date of publication and mention of the grant of the patent: **22.04.2026**
(21) Application number: 20828572.6
(22) Date of filing: 29.09.2020
(51) Int. Cl.: G01C 21/16, G01C 21/20

(54) **USER TRAJECTORY ESTIMATION BASED ON INERTIAL MEASUREMENT UNIT DATA**
SCHÄTZUNG DER BENUTZERTRAJEKTORIE BASIEREND AUF TRÄGHEITSMESSEINHEITSDATEN
ESTIMATION DE TRAJECTOIRE D'UTILISATEUR BASÉE SUR DES DONNÉES D'UNITÉ DE MESURE INERTIELLE

(43) Date of publication of application: 19.07.2023
(73) Proprietor: Huawei Technologies Co., Ltd., Shenzhen, Guangdong 518129 (CN)
(72) Inventor: ZHARIKOV, Ilya, Moscow, 117303 (RU); NIKITIN, Filipp, Moscow, 117303 (RU); GADAEV, Tamaz, Moscow, 117303 (RU); VASILIEV, Ilia, Moscow, 117303 (RU); STRIJOV, Vadim, Moscow, 117303 (RU); GONCHAROV, Alexey, Moscow, 117303 (RU); GARTSEEV, Ilya Borisovich, Shenzhen, Guangdong, 518129 (CN); PIKHLETSKY, Mikhail Viktorovich, Shenzhen, Guangdong, 518129 (CN)
(74) Representative: Goddar, Heinz J.
(86) International application number: PCT/RU2020/000501
(87) International publication number: WO 2022/071821

(56) References cited:
- EP-A1- 3 819 592
- WO-A1-2020/008878
- CN-A- 105 021 189
- US-A1- 2015 198 625
- FEIGL TOBIAS ET AL: "A Bidirectional LSTM for Estimating Dynamic Human Velocities from a Single IMU", 2019 INTERNATIONAL CONFERENCE ON INDOOR POSITIONING AND INDOOR NAVIGATION (IPIN), IEEE, 30 September 2019 (2019-09-30), pages 1 - 8, XP033667335, DOI: 10.1109/IPIN.2019.8911814
- HERATH SACHINI ET AL: "RoNIN: Robust Neural Inertial Navigation in the Wild: Benchmark, Evaluations, & New Methods", 2020 IEEE INTERNATIONAL CONFERENCE ON ROBOTICS AND AUTOMATION (ICRA), IEEE, 31 May 2020 (2020-05-31), pages 3146 - 3152, XP033826197, DOI: 10.1109/ICRA40945.2020.9196860
- KLEIN ITZIK ET AL: "StepNet-Deep Learning Approaches for Step Length Estimation", IEEE ACCESS, IEEE, USA, vol. 8, 7 May 2020 (2020-05-07), pages 85706 - 85713, XP011789004, DOI: 10.1109/ACCESS.2020.2993534
- ALHARTHI ABDULLAH S ET AL: "Deep Learning for Monitoring of Human Gait: A Review", IEEE SENSORS JOURNAL, IEEE SERVICE CENTER, NEW YORK, NY, US, vol. 19, no. 21, 1 November 2019 (2019-11-01), pages 9575 - 9591, XP011749038, ISSN: 1530-437X, [retrieved on 20191003], DOI: 10.1109/JSEN.2019.2928777
- CHANGHAO CHEN ET AL: "IONet: Learning to Cure the Curse of Drift in Inertial Odometry", ARXIV.ORG, CORNELL UNIVERSITY LIBRARY, 201 OLIN LIBRARY CORNELL UNIVERSITY ITHACA, NY 14853, 30 January 2018 (2018-01-30), XP081211779

## Description

### TECHNICAL FIELD

The present disclosure relates generally to the field of network navigation, and particularly to techniques for user trajectory estimation in a wireless communication network based on inertial measurement unit (IMU) data.

### BACKGROUND

A Global Positioning System (GPS) based navigation system includes a GPS receiver that receives information from satellites orbiting the earth and uses the information to determine a location of the GPS receiver. The GPS-based navigation system may be installed in different mobile user equipment (UE), such, for example, as wireless phones. The GPS-equipped wireless phones are employed by users to determine their location, as well as to reach a desired destination. In general, the GPS-based navigation system allows a user location and, as a result, a user trajectory to be estimated with high accuracy. However, the GPS-based navigation system suffers from the following disadvantage: it requires an open space between the mobile UE and the satellite(s) to pass radio signals therebetween. In the real world, there are different obstacles on the path of the radio signals, such, for example, as trees, landforms, skyscrapers, etc. Therefore, the accuracy of user location determination decreases due to the reflection of the radio signals from such obstacles. In particular, using the GPS-based navigation system to track the user trajectory inside a building (i.e. the so-called indoor scenario) becomes almost useless.

Given the above, it has been proposed to use data from an IMU typically included in the mobile UE to estimate the user location and trajectory, especially, in the indoor scenario. The IMU may comprise a gyroscope, a magnetometer, and an accelerometer. The IMU data are needed to be properly processed to provide accurate user location determination. Machine learning (ML) may assist in processing the IMU data in this case. However, the existing ML-based methods for processing the IMU data do not still provide the acceptable accuracy of user location determination.

WO 2020/008878 A1 describes a positioning method using an acceleration sensor and an angular velocity sensor. A movement vector is estimated using a machine learning model on the basis of acceleration of a device and an angular velocity of the device, the movement vector indicating a movement amount and a movement direction of the device. Then, the estimated movement vector is integrated, and a relative position of the device is calculated. The method is applied to a positioning apparatus that measures a position of a pedestrian.

The document "A bidirectional LSTM for estimating dynamic human velocities from a single IMU" by T. Feigl et al., Int. Conf. on Indoor Positioning and Indoor Navigation (IPIN), Sep. 2019, describes a method for estimating a human's velocity using machine learning and deep learning.

US 2015/198625 A1 describes a mobile device configured to estimate a direction of motion of a user. The mobile device comprises an inertial sensor to capture acceleration signals based on motion of the user and a direction estimation module. The direction estimation module determines the direction of gravity based on filtering acceleration values using a low-pass filter to identify a plane orthogonal to the direction of gravity. The plane orthogonal to the gravity comprises two orthogonal axes. Displacement values are evaluated based on a user input for placement of the mobile device with respect to user's body, and integration of the acceleration values across the two orthogonal axes with respect to time. A direction of motion of the user is estimated based on a ratio of the displacement values along the two orthogonal axes.

CN 105 021 189 A describes a calibration method of postures of a mobile equipment, wherein the method uses an accelerometer and a gyroscope.

The document "RoNIN: Robust neural inertial navigation in the wild: Benchmark, evaluations, & new methods" by H. Sachini et al., IEEE Int. Conf. on Robotics and Automation, May 2020, relates to the task of estimating horizontal positions and heading direction of a moving subject from a sequence of IMU sensor measurements from a phone. In a first method referred to as "RoNIN ResNet", a 1D version of the ResNet-18 architecture is applied and a fully connected layer with 512 units is added at the end to regress a 2D vector. In a second method referred to as "RoNIN LSTM", a stacked unidirectional LSTM is used while enriching its input feature by concatenating the output of a bilinear layer. RoNIN-LSTM has three layers each with 100 units and regresses a 2D vector for each frame. The RoNIN ResNet and the RoNIN LSTM both operate on IMU sensor measurements that have been transformed to a heading-agnostic coordinate frame.

### SUMMARY

This summary is provided to introduce a selection of concepts in a simplified form that are further described below in the detailed description. This summary is not intended to identify key features of the present disclosure.

It is an objective of the present disclosure to provide a technical solution that allows user trajectory estimation in a wireless communication network based on inertial measurement unit (IMU) data.

The objective above is achieved by the features of the independent claims in the appended claims. Further embodiments and examples are apparent from the dependent claims, the detailed description and the accompanying drawings.

According to a first aspect, an apparatus for user trajectory estimation in a wireless communication network is provided. The apparatus comprises a processor and a memory coupled to the processor. The memory is configured to store processor-executable instructions. Being caused by the processor-executable instructions, the processor is configured to receive input data from an IMU included in a mobile UE. The input data comprise first-type measurements and second-type measurements. The first-type measurements and the second-type measurements are different from each other and taken in an IMU-linked coordinate frame. After that, the processor is configured to use the first-type measurements or the second-type measurements to obtain a representation of rotational orientation of the IMU. Then, the processor is configured to transfer the first-type measurements and the second-type measurements from the IMU-linked coordinate frame to a user-linked coordinate frame. Next, the processor is configured to determine velocity vectors of the UE in the user-linked coordinate frame by using a pre-trained neural network (NN). The NN is configured to use the first-type measurements and the second-type measurements in the user-linked coordinate frame as inputs, and each of the velocity vectors is indicative of a UE displacement for a given period of time. The processor is further configured to transfer the velocity vectors from the user-linked coordinate frame to a world coordinate frame by using the representation of rotational orientation of the IMU, and calculate user trajectory coordinates by integrating the velocity vectors in the world coordinate frame. With this configuration, the apparatus according to the first aspect may provide user navigation based on the IMU data with high accuracy, especially, in an indoor scenario. Moreover, the apparatus according to the first aspect may be applied to any mobile UE (e.g., a smartphone, smart watches, etc.) equipped with the IMU, thereby making the apparatus more flexible in use.

The IMU comprises a combination of an accelerometer and a gyroscope. In this embodiment, the first-type measurements comprise accelerometer readings and the second-type measurements comprise gyroscope readings, or vice versa. Moreover, the processor is configured to obtain, based on the gyroscope readings, the representation of rotational orientation of the IMU as a set of rotation quaternions or rotation matrices. By using the rotation quaternions or rotation matrices, it is possible to provide the proper representation of orientations and rotations of the mobile UE in three dimensions.

In one embodiment of the first aspect, the accelerometer readings comprise a combination of a low-frequency component indicative of a gravity vector and a high-frequency component indicative of a user walking. In this embodiment, the processor may be further configured, before said transferring the first-type measurements and the second-type measurements, to correct a drift-caused error in the gyroscope readings by:
- transferring the accelerometer readings to the world coordinate frame by using the set of rotation quaternions;
- filtering the high-frequency component from the accelerometer readings in the world coordinate frame;
- finding a difference between the low-frequency component and a true gravity vector that is defined in the world coordinate frame; and
- using the difference to correct the drift-caused error in the gyroscope readings.

By eliminating the drift-caused error in the gyroscope readings in this way, it is possible to increase the accuracy of the whole user trajectory estimation.

In one embodiment of the first aspect, the processor is configured to perform said filtering by computing a Fourier spectrum for the accelerometer readings and removing the high-frequency component from the Fourier spectrum. This may provide more efficient elimination of the drift-caused error in the gyroscope readings.

The NN comprises a combination of a first NN and a second NN. The first NN is configured to extract features from the first-type measurements and the second-type measurements in the user-linked coordinate frame for a given period of time. The second NN is configured to accumulate the extracted features from the first NN and generate the velocity vector of the UE in the user-linked coordinate frame for the given period of time. By configuring the NN in this manner, one may achieve its more efficient operation, i.e. better results of determining the velocity vectors of the UE in the user-linked coordinate frame.

The first NN is configured as a convolutional NN (CNN) with one or more residual connections, and the second NN is configured as a gated recurrent NN. By using such types of the first and second NNs, it is possible to increase the accuracy of determining the velocity vectors of the UE in the user-linked coordinate frame.

According to a second aspect, a method for user trajectory estimation in a wireless communication network is provided. The method starts with the step of receiving input data from an inertial measurement unit (IMU) included in a mobile user equipment (UE). The input data comprise first-type measurements and second-type measurements. The first-type measurements and the second-type measurements are different from each other and taken in an IMU-linked coordinate frame. Further, the method proceeds to the step of using the first-type measurements or the second-type measurements to obtain a representation of rotational orientation of the IMU. Then, the method proceeds to the step of transferring the first-type measurements and the second-type measurements from the IMU-linked coordinate frame to a user-linked coordinate frame. After that, the next step is initiated, in which velocity vectors of the UE in the user-linked coordinate frame are determined by using a pre-trained neural network (NN). The NN uses the first-type measurements and the second-type measurements in the user-linked coordinate frame as inputs, and each of the velocity vectors is indicative of a UE displacement for a given period of time. Next, the method goes to the step of transferring the velocity vectors from the user-linked coordinate frame to a world coordinate frame by using the representation of rotational orientation of the IMU. The method ends up with the step of calculating user trajectory coordinates by integrating the velocity vectors in the world coordinate frame. By so doing, it is possible to perform user navigation based on the IMU data with high accuracy, especially, in an indoor scenario. Moreover, the method according to the second aspect may be applied to any mobile UE (e.g., a smartphone, smart watches, etc.) equipped with the IMU, thereby making the method more flexible in use.

The IMU comprises a combination of an accelerometer and a gyroscope. The first-type measurements comprise accelerometer readings and the second-type measurements comprise gyroscope readings, or vice versa. Moreover, the method involves obtaining, based on the gyroscope readings, the representation of rotational orientation of the IMU as a set of rotation quaternions or rotation matrices. By using the rotation quaternions or rotation matrices, it is possible to provide the proper representation of orientations and rotations of the mobile UE in three dimensions.

In one embodiment of the second aspect, the accelerometer readings comprise a combination of a low-frequency component indicative of a gravity vector and a high-frequency component indicative of a user walking. In this embodiment, the method further comprises, before the step of transferring the first-type measurements and the second-type measurements, the step of correcting a drift-caused error in the gyroscope readings by:
- transferring the accelerometer readings to the world coordinate frame by using the set of rotation quaternions;
- filtering the high-frequency component from the accelerometer readings in the world coordinate frame;
- finding a difference between the low-frequency component and a true gravity vector that is defined in the world coordinate frame; and
- using the difference to correct the drift-caused error in the gyroscope readings.

By eliminating the drift-caused error in the gyroscope readings in this way, it is possible to increase the accuracy of the whole user trajectory estimation.

In one embodiment of the second aspect, the high-frequency component is filtered by computing a Fourier spectrum of the accelerometer readings and removing the high-frequency component from the Fourier spectrum. This may provide more efficient elimination of the drift-caused error in the gyroscope readings.

The NN comprises a combination of a first NN and a second NN. The first NN is configured to extract features from the first-type measurements and the second-type measurements in the user-linked coordinate frame for a given period of time. The second NN is configured to accumulate the extracted features from the first NN and generate the velocity vector of the UE in the user-linked coordinate frame for the given period of time. By configuring the NN in this manner, one may achieve its more efficient operation, i.e. better results of determining the velocity vectors of the UE in the user-linked coordinate frame.

The first NN is configured as a convolutional NN (CNN) with one or more residual connections, and the second NN is configured as a gated recurrent NN. By using such types of the first and second NNs, it is possible to increase the accuracy of determining the velocity vectors of the UE in the user-linked coordinate frame.

According to a third aspect, a computer program for causing a computer to perform the method according to the second aspect. By using such a computer program, it is possible to simplify the implementation of the method according to the second aspect in any computing device, such, for example, as the apparatus according to the first aspect.

According to a fourth aspect, a computer-readable non-transitory storage medium is provided. The storage medium stores a computer code which, when executed by a processor, causes the processor to perform the method according to the second aspect. By using such a storage medium, it is possible to simplify the implementation of the method according to the second aspect in any computing device, such, for example, as the apparatus according to the first aspect.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows a block diagram of an apparatus for user trajectory estimation in a wireless communication network in accordance with one exemplary embodiment;
FIG. 2 shows a flowchart of a method for user trajectory estimation in a wireless communication network in accordance with one exemplary embodiment;
FIG. 3 explains how a gyroscope-drift reduction technique may be integrated into the method shown in FIG. 2 in accordance with one exemplary embodiment;
FIG. 4 shows a block-scheme of a pre-trained NN that may be used in the method shown in FIG. 2 in accordance with one exemplary embodiment; and
FIG. 5 shows a block-scheme of each residual block included in the NN shown in FIG. 4 in accordance with one exemplary embodiment.

### DETAILED DESCRIPTION

Various embodiments of the present disclosure are further described in more detail with reference to the accompanying drawings. However, the present disclosure may be embodied in many other forms. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatus and method disclosed herein may be implemented in practice by using any numbers of the embodiments provided herein. Furthermore, it should be understood that any embodiment of the present disclosure may be implemented using one or more of the elements presented in the appended claims.

The word "exemplary" is used herein in the meaning of "used as an illustration". Unless otherwise stated, any embodiment described herein as "exemplary" should not be construed as preferable or having an advantage over other embodiments.

According to the embodiments disclosed herein, a mobile user equipment or mobile UE for short may refer to a mobile device, a mobile station, a mobile terminal, a subscriber unit, a mobile phone, a cellular phone, a smart phone, a cordless phone, a personal digital assistant (PDA), a wireless communication device, a laptop computer, a tablet computer, a gaming device (e.g., a gaming console, a gaming controller, etc.), a netbook, a smartbook, an ultrabook, a medical device or medical equipment, a biometric sensor, a wearable device (e.g., a smart watch, smart glasses, a smart wrist band, etc.), an entertainment device (e.g., an audio player, a video player, etc.), a vehicular component or sensor, a smart meter/sensor, an unmanned vehicle (e.g., an industrial robot, a quadcopter, etc.), industrial manufacturing equipment, a global positioning system (GPS) device, an Internet-of-Things (IoT) device, a machine-type communication (MTC) device, a group of Massive IoT (MIoT) or Massive MTC (mMTC) devices/sensors, or any other suitable mobile device configured to support wireless communications. In some example embodiments, the mobile UE may refer to at least two collocated and inter-connected mobile UEs thus defined.

As used in the embodiments disclosed herein, an inertial measurement unit or an IMU for short may refer to one or more inertial sensors included in a mobile UE. Some examples of the inertial sensors may include angular rate sensors (gyroscopes), acceleration sensors (accelerometers), and magnetic field sensors (magnetometers) which are arranged to measure the rotational and translational motion of the mobile UE or, in other words, a user carrying the mobile UE. At the same time, it should be noted that the present disclosure is not limited to these examples of the inertial sensors - in some embodiments, the IMU may additionally or alternatively include altimeter (for example, if the mobile UE is represented by a unmanned aerial vehicle), or any other electronic device configured to measure and report at least one of a specific movement, position, magnetic field direction and orientation of the mobile UE. Calculations based on measurements or readings from the inertial sensors may be used to estimate the trajectory of the user moving within a wireless communication network.

According to the embodiments disclosed herein, a wireless communication network in which a user trajectory should be estimated may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

Although in outdoor scenarios (i.e. in open spaces) GPS-based navigation constitutes a reliable and easily available technology for determining a user location and trajectory, it is not the case in indoor scenarios (i.e. in closed or partly open spaces). This is because radio signals transmitted from one or more GPS satellites orbiting the earth meet different obstacles, such, for example, as trees, building walls, etc., on their path to a GPS receiver included in a mobile UE being, for example, inside a building. Therefore, the determination accuracy of the user location and trajectory decreases due to the reflection of the radio waves from such obstacles.

One possible way to overcome the above-indicated problem is to use data (i.e. measurements or readings) from the IMU that may be part of the mobile UE, in order to determine the user location and trajectory in the indoor scenarios. The IMU data should be properly processed to provide the acceptable determination results. To do this, one may use Machine learning (ML) techniques, such as neural networks (NNs). However, the NNs came into use for this purpose a short time ago, for which reason there are not so many NN-based solutions for determining the user location and trajectory in the art. Even those that are available in the art do not allow the user location and trajectory to be determined with the acceptable accuracy. Moreover, the available NN-based solutions are cost-intensive in terms of memory, and do not take into account the problem of gyroscope drift in case of using a gyroscope in the IMU.

The exemplary embodiments disclosed herein provide a technical solution that allows mitigating or even eliminating the above-sounded drawbacks peculiar to the prior art. In particular, the technical solution disclosed herein allows estimation of a user trajectory in a wireless communication network with high accuracy, especially, in indoor scenarios (e.g., inside buildings). To do this, IMU data are used, which comprise first-type measurements and second-type measurements from an IMU being part of a mobile UE carried by a user. The first-type measurements and the second-type measurements are initially taken in an IMU-linked coordinate frame. Further, the first-type measurements or the second-type measurements are used to obtain a representation of rotational orientation of the IMU. Then, the first-type measurements and the second-type measurements are transferred from the IMU-linked coordinate frame to a user-linked coordinate frame, whereupon velocity vectors of the UE in the user-linked coordinate frame are determined by using a pre-trained neural network (NN). The velocity vectors are next transferred from the user-linked coordinate frame to a world coordinate frame by using the representation of rotational orientation of the IMU. The user trajectory coordinates are calculated by integrating the velocity vectors in the world coordinate frame.

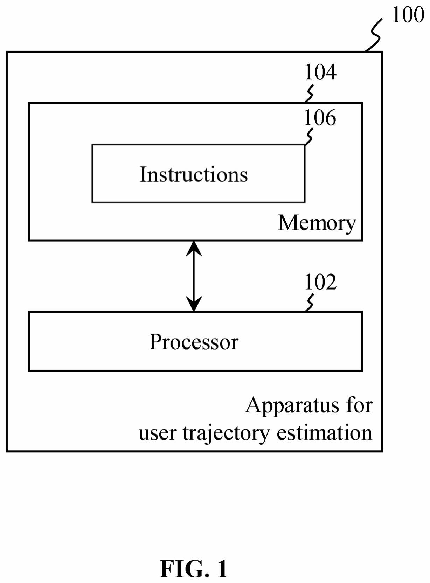

FIG. 1 shows a block diagram of an apparatus 100 for user trajectory estimation in a wireless communication network in accordance with one exemplary embodiment. The apparatus 100 may be part of the mobile UE or implemented as an individual apparatus configured to communicate with the mobile UE via wireless or wired connection. It is also intended that the UE is equipped with the IMU. As shown in FIG. 1, the apparatus 100 comprises a processor 102 and a memory 104. The memory 104 stores processor-executable instructions 106 which, when executed by the processor 102, cause the processor 102 to estimate user trajectory coordinates, as will be described below in more detail. It should be noted that the number, arrangement and interconnection of the constructive elements constituting the apparatus 100, which are shown in FIG. 1, are not intended to be any limitation of the present disclosure, but merely used to provide a general idea of how the constructive elements may be implemented within the apparatus 100. For example, the processor 102 may be replaced with several processors, as well as the memory 104 may be replaced with several removable and/or fixed storage devices, depending on particular applications. Furthermore, being implemented individually, the apparatus 100 may further comprise a transceiver configured to receive, as input data, the IMU data from the UE and, in response (i.e. upon processing the IMU data), provide the user trajectory coordinates to the UE. In some embodiments, such a transceiver may be implemented as two individual devices, with one for a receiving operation and another for a transmitting operation. Irrespective of its implementation, the transceiver is intended to be capable of performing different operations required to perform data reception and transmission, such, for example, as signal modulation/demodulation, encoding/decoding, etc.

The processor 102 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 102 may be implemented as any combination of one or more of the aforesaid. As an example, the processor 102 may be a combination of two or more microprocessors.

The memory 104 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 106 stored in the memory 104 may be configured as a computer-executable code which causes the processor 102 to perform the aspects of the present disclosure. The computer-executable code for carrying out operations or steps for the aspects of the present disclosure may be written in any combination of one or more programming languages, such as Java, C++, or the like. In some examples, the computer-executable code may be in the form of a high-level language or in a pre-compiled form, and be generated by an interpreter (also pre-stored in the memory 104) on the fly.

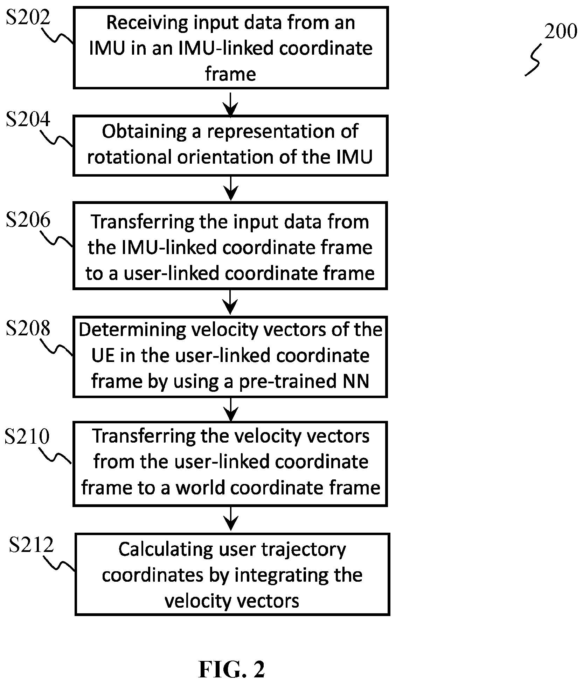

FIG. 2 shows a flowchart of a method 200 for user trajectory estimation in a wireless communication network in accordance with one exemplary embodiment. In general, the method 200 describes the operation of the apparatus 100. The method 200 starts with a step S202, in which the processor 102 receives input data from the IMU included in the mobile UE. The input data comprise first-type measurements and second-type measurements. The first-type measurements and the second-type measurements are different from each other and taken in an IMU-linked coordinate frame. Further, the method 200 proceeds to a step S204, in which the processor 102 uses the first-type measurements or the second-type measurements to obtain a representation of rotational orientation of the IMU. Then, the method 200 proceeds to a step S206, in which the processor 102 transfers the first-type measurements and the second-type measurements from the IMU-linked coordinate frame to a user-linked coordinate frame. After that, a step S208 is initiated, in which the processor 102 determines velocity vectors of the UE in the user-linked coordinate frame by using a pre-trained neural network (NN). The NN uses the first-type measurements and the second-type measurements in the user-linked coordinate frame as inputs. The NN may be pre-trained by using past IMU data and associated past user trajectory coordinates as a training set and based on any appropriate training method, such, for example, as backpropagation. Each of the velocity vectors is indicative of a UE (or user) displacement for a given period of time. Next, the method 200 goes to a step 210, in which the processor 102 transfers the velocity vectors from the user-linked coordinate frame to a world coordinate frame by using the representation of rotational orientation of the IMU. The method 200 ends up with a step 212, in which the processor 102 calculates user trajectory coordinates by integrating the velocity vectors in the world coordinate frame. By so doing, it is possible to perform user navigation based on the IMU data with high accuracy, especially, in the indoor scenarios.

The IMU is represented by a combination of an accelerometer and a gyroscope. The first-type measurements comprise accelerometer readings and the second-type measurements comprise gyroscope readings, or vice versa. By using the gyroscope readings, the representation of rotational orientation of the IMU is obtained, in the step S204 of the method 200, in the form of a set of rotation quaternions or rotation matrices. Both the rotation quaternions and matrices are well-known in the art, whereupon their description is omitted herein.

One of the main problems inherent in typical gyroscopes is a gyroscope drift. The gyroscope drift is defined by the friction and alignment of moving parts of a gyroscope. The gyroscope drift leads to errors in angular velocity measurements, which in turn results in the erroneous user trajectory estimation in the wireless communication network. Moreover, these errors tend to be cumulative over time. Therefore, it is important to use drift compensation techniques to provide the proper user trajectory estimation.

The accelerometer and the gyroscope are part of the IMU, and the gyroscope drift may be reduced by using the following technique. Let us first start with the consideration of the accelerometer readings. The accelerometer readings may be considered as a combination of a low-frequency component indicative of a gravity vector and a high-frequency component indicative of a user walking in the IMU-linked coordinate frame. Given this, the processor 102 may be further configured, before the step S206 of the method 200, to correct a drift-caused error in the gyroscope readings by:
- transferring the accelerometer readings to the world coordinate frame by using the rotation quaternions (obtained in the step S204 of the method 200);
- filtering the high-frequency component from the accelerometer readings in the world coordinate frame;
- finding a difference between the low-frequency component and the true gravity vector; and
- using the difference to correct the drift-caused error in the gyroscope readings.

The high-frequency component may be filtered by using a Fourier transformation (e.g., a Fast Fourier transformation (FFT)). More specifically, the processor 102 may be configured to compute a Fourier spectrum for the accelerometer readings and remove the high-frequency component from the Fourier spectrum.

Once the high-frequency component is filtered, the accelerometer readings should be represented by the low-frequency component only, i.e. the gravity vector in the world coordinate frame. The difference between the low-frequency component and the true gravity vector (i.e. the constant vector (0, 0, 9.8)) is defined by the drift-caused error in the gyroscope readings which have been used to transfer the acceleration readings to the world coordinate frame. By said difference, the shortest rotations of the low-frequency component are implied, which align the low-frequency component with the true gravity vector (0, 0, 9.8). These rotations are then used as the correcting rotations for the gyroscope readings and, consequently, the rotation quaternions. This gyroscope-drift reduction technique is conducted at every instant. In other words, there is the shortest rotation for each instant. All such shortest rotations are used to correct all rotation quaternions.

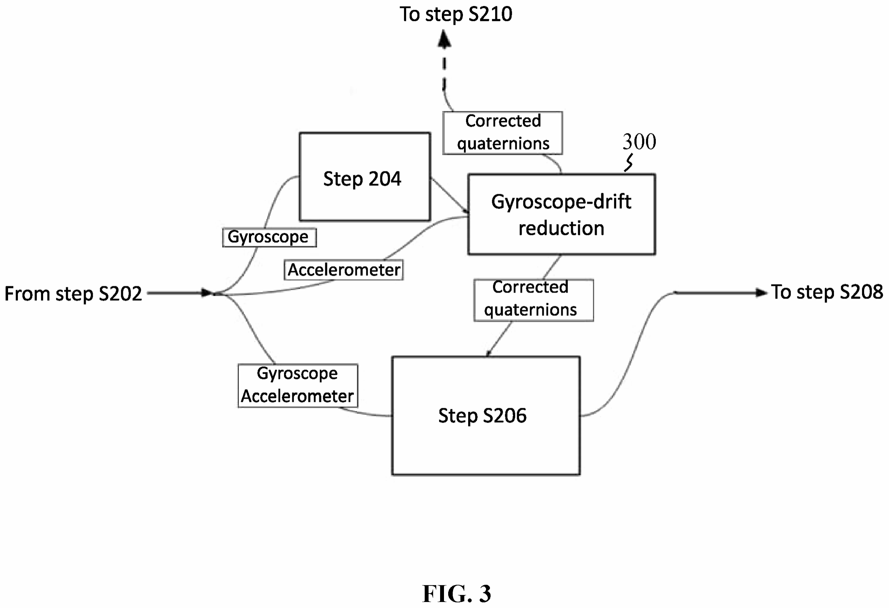

FIG. 3 explains how the gyroscope-drift reduction technique may be integrated into the method 200 in accordance with one exemplary embodiment. In particular, the gyroscope-drift reduction technique is schematically denoted as a block 300 in FIG. 3. Given the block 300, the method 200 may be performed as follows. In the step S202, the processor 102 receives the gyroscope readings and the accelerometer readings from the IMU of the mobile UE (in FIG. 3, the gyroscope and accelerometer readings are denoted as "Gyroscope" and "Accelerometer", respectively, in order not to overload the figure). Then, the processor 102 uses the gyroscope readings to calculate the rotation quaternions (which is one example of the representation of rotational orientation of the IMU, as noted above) in the step S204 of the method 200. Next, the processor 102 performs the above-described gyroscope-drift reduction technique based on the rotation quaternions and the accelerometer readings. As discussed above, the outcome of the gyroscope-drift reduction technique is represented by the corrected quaternions which are further used in the step S206 to correct the gyroscope readings and in the step S210 to transfer the velocity vectors from the user-linked coordinate frame to the world coordinate frame. The rest steps of the method 200 are performed in the same manner as described above with reference to FIG. 2.

The pre-trained NN used in the step 208 of the method 200 comprises a combination of a first NN and a second NN. The first NN is configured to extract features from the first-type measurements and the second-type measurements in the user-linked coordinate frame for a given period of time. The second NN is configured to accumulate the extracted features from the first NN and generate the velocity vector of the mobile UE in the user-linked coordinate frame for the given period of time. By configuring the NN in this manner, one may achieve its more efficient operation, i.e. better results of determining the velocity vectors of the mobile UE in the user-linked coordinate frame. The first NN is configured as a convolutional NN with one or more residual connections, while the second NN is configured as a gated recurrent NN.

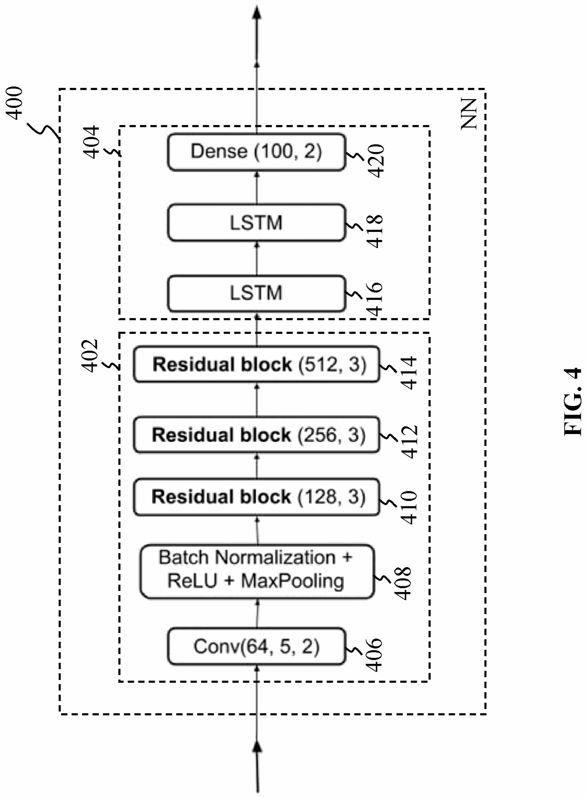

FIG. 4 shows a block-scheme of a pre-trained NN 400 that may be used in the method 200 in accordance with one exemplary embodiment. The NN 400 comprises a first NN 402 and a second NN 404. The first NN 402 serves as a feature extractor, which takes useful information (i.e. features) from the time-series of the IMU data for the user trajectory estimation. The second NN 404 accumulates all the features extracted by the first NN 402 through the whole given period of time and generates a mean velocity vector of the given period of time. The second NN 404 may be considered as an "integration part" of the NN 400. Each of the first NN 402 and the second NN 404 may be implemented as follows.

The first NN 402 may be configured as a ResNet-18 without the last layer. The ResNet-18 is a specific well-known type of convolutional NNs with residual connection, whereupon its detailed description is omitted herein. As shown in FIG. 4, the first NN 402 (i.e. the ResNet-18 without the last layer) comprises a convolutional layer 406, a composite layer 408, and three residual blocks 410-414. The convolutional layer 406 comprises a set of trainable filters which are used to extract the features from the time-series of the IMU data for the user trajectory estimation. The composite layer 408 comprises a batch normalization sublayer, a Rectified Linear Unit (ReLu) sublayer, and a max pooling layer. The batch normalization sublayer is used to subtract a mean from an input dataset constituted by the features extracted by the convolutional layer 406 and divide the result by a standard deviation. The mean and standard deviation are calculated on batches during training. The ReLu sublayer transforms the output of the batch normalization sublayer with a non-linear function. The max pooling sublayer is used to take local maximums at small intervals, and its main purpose is to shorten the output of the ReLu sublayer. The residual blocks 410-414 are efficient for further feature extraction and are easy to train. The residual blocks 410-414 may comprise convolutional layers as well.

The second NN 404 may be configured as a combination of two long short-term memory (LSTM) layers 416, 418 and a dense layer 420. LSTM is a specific type of a well-known gated recurrent NN, whereupon its detailed description is also omitted herein. The dense layer 420 is a regular deeply connected NN layer.

It should be noted that the numbers indicated in the parentheses in FIG. 4 represent possible layer parameters. In particular, the caption "(64, 5, 2)" means that there are 64 filters of size 5 with stride 2 in the convolutional layer 406. For the residual blocks 410-414, the captions "(128, 3)", "(256, 3)", and "(512, 3)" mean that there are, respectively, 128, 256, and 512 filters of size 3 in the inner convolutional layers of the residual blocks 410-414. For the dense layer 420, the caption "(100,2)" means that this layer transforms an input vector of size 100 to an output vector of size 2. Those skilled in the art will understand that the numbers indicated in FIG. 4 are merely exemplary and may be replaced with any other ones, if required and depending on particular applications.

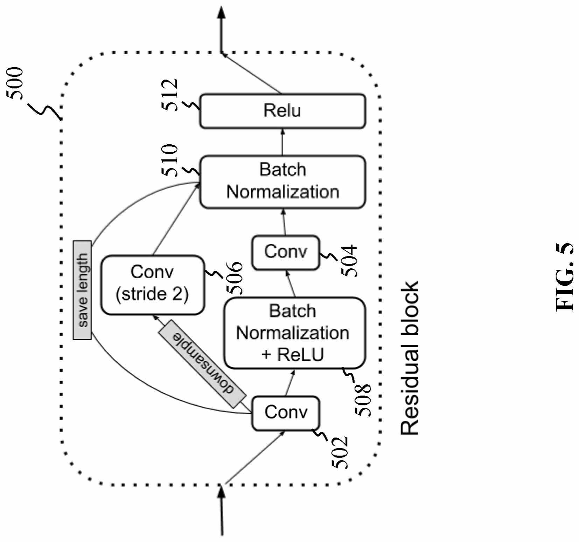

FIG. 5 shows a block-scheme of a residual block 500 that may be used in the first NN 402 of the NN 400 in accordance with one exemplary embodiment. As shown in FIG. 5, the residual block 500 comprises three convolutional layers 502-506, a composite layer 508 constituted by a batch normalization sublayer and a ReLu sublayer, an individual batch normalization layer 510, and an individual ReLu layer 512. It should be noted that each of the residual blocks 410-414 shown in FIG. 4 may be implemented as the residual block 500 by selecting a proper number of filters in the convolutional layers 502-506.

The residual block 500 may operate in two modes, with one mode relating to saving a length of an input dataset (i.e. the extracted and processed features from the time-series of the IMU data) and another mode relating to downsampling the input dataset. The convolutional layer 502 may comprise a dedicated parameter indicating which of the two modes should be used. This parameter may be represented by a Boolean value (i.e. be set to "true" or "false").

If the downsampling mode is used (e.g., the parameter is set to "true"), the input dataset is provided from the convolutional layer 502 to the convolutional layer 506 where it is transformed with filters of size 1 and stride 2. This transformation makes the input dataset 2 times shorter.

If the parameter is set to "false", then the shortening mode should not be used. This means that the input features are directed from the convolutional layer 502 to the individual batch normalization layer 510, meaning a sum operation. More specifically, the individual Relu layer 512 takes the sum of "batchnorm(conv1) + batchnorm(conv2)", where "batchnorm" is short for batch normalization, "conv1" is the output from the convolutional layer 502, and "conv2" is the output from the convolutional layer 504.

It should be noted that each step or operation of the method 200, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the executable instructions which embody the steps or operations described above can be stored on a corresponding data carrier and executed by the processor 102. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

## Claims

1. An apparatus (100) for user trajectory estimation in a wireless communication network, the apparatus comprising:
a processor (102); and
a memory (104) coupled to the processor (102) and storing processor-executable instructions (106),
wherein the processor (102) is configured, when executing the processor-executable instructions (106), to:
- receive (S202) input data from an inertial measurement unit, IMU, included in a mobile user equipment, UE, the input data comprising first-type measurements and second-type measurements, the first-type measurements and the second-type measurements being different from each other and taken in an IMU-linked coordinate frame;
- based on the first-type measurements or the second-type measurements, obtain (S204) a representation of rotational orientation of the IMU;
- transfer (S206) the first-type measurements and the second-type measurements from the IMU-linked coordinate frame to a user-linked coordinate frame;
- determine (S208) velocity vectors of the UE in the user-linked coordinate frame by using a pre-trained neural network, NN (400), the NN using the first-type measurements and the second-type measurements in the user-linked coordinate frame as inputs, the NN comprising a combination of a first NN and a second NN, the first NN being configured to extract features from the first-type measurements and the second-type measurements in the user-linked coordinate frame for a given period of time, the second NN being configured to accumulate the extracted features from the first NN and generate the velocity vector of the UE in the user-linked coordinate frame for the given period of time, the first NN being configured as a convolutional NN with one or more residual connections, the second NN being configured as a gated recurrent NN, and each of the velocity vectors being indicative of a UE displacement for the given period of time;
- transfer (S210) the velocity vectors from the user-linked coordinate frame to a world coordinate frame by using the representation of rotational orientation of the IMU; and
- calculate (S212) user trajectory coordinates by integrating the velocity vectors in the world coordinate frame;
wherein
the IMU comprises a combination of an accelerometer and a gyroscope;
the first-type measurements comprise accelerometer readings and the second-type measurements comprise gyroscope readings, or vice versa; and
the processor (102) is configured to obtain (S204), based on the gyroscope readings, the representation of rotational orientation of the IMU as a set of rotation quaternions or rotation matrices.

2. The apparatus (100) of claim 1, wherein the accelerometer readings comprise a combination of a low-frequency component indicative of a gravity vector and a high-frequency component indicative of a user walking, and wherein the processor (102) is further configured, before said transferring (S206) the first-type measurements and the second-type measurements, to correct a drift-caused error in the gyroscope readings by:
- transferring the accelerometer readings to the world coordinate frame by using the set of rotation quaternions;
- filtering the high-frequency component from the accelerometer readings in the world coordinate frame;
- finding a difference between the low-frequency component and a true gravity vector that is defined in the world coordinate frame; and
- using the difference to correct the drift-caused error in the gyroscope readings.

3. The apparatus (100) of claim 2, wherein the processor (102) is configured to perform said filtering by computing a Fourier spectrum for the accelerometer readings and removing the high-frequency component from the Fourier spectrum.

4. A method for user trajectory estimation in a wireless communication network, the method comprising:
- receiving (S202) input data from an inertial measurement unit, IMU, included in a mobile user equipment, UE, the input data comprising first-type measurements and second-type measurements, the first-type measurements and the second-type measurements being different from each other and taken in an IMU-linked coordinate frame;
- based on the first-type measurements or the second-type measurements, obtaining (S204) a representation of rotational orientation of the IMU;
- transferring (S206) the first-type measurements and the second-type measurements from the IMU-linked coordinate frame to a user-linked coordinate frame;
- determining (S208) velocity vectors of the UE in the user-linked coordinate frame by using a pre-trained neural network, NN (400), the NN using the first-type measurements and the second-type measurements in the user-linked coordinate frame as inputs, the NN comprising a combination of a first NN and a second NN, the first NN being configured to extract features from the first-type measurements and the second-type measurements in the user-linked coordinate frame for a given period of time, the second NN being configured to accumulate the extracted features from the first NN and generate the velocity vector of the UE in the user-linked coordinate frame for the given period of time, the first NN being configured as a convolutional NN with one or more residual connections, the second NN being configured as a gated recurrent NN, and each of the velocity vectors being indicative of a UE displacement for the given period of time;
- transferring (S210) the velocity vectors from the user-linked coordinate frame to a world coordinate frame by using the representation of rotational orientation of the IMU; and
- calculating (S212) user trajectory coordinates by integrating the velocity vectors in the world coordinate frame;
wherein
the IMU comprises a combination of an accelerometer and a gyroscope;
the first-type measurements comprise accelerometer readings and the second-type measurements comprise gyroscope readings, or vice versa; and
said obtaining (S204) comprises obtaining, based on the gyroscope readings, the representation of rotational orientation of the IMU as a set of rotation quaternions or rotation matrices.

5. The method of claim 4, wherein the accelerometer readings comprise a combination of a low-frequency component indicative of a gravity vector and a high-frequency component indicative of a user walking, and wherein the method further comprises, before said transferring (S206) the first-type measurements and the second-type measurements, correcting a drift-caused error in the gyroscope readings by:
- transferring the accelerometer readings to the world coordinate frame by using the set of rotation quaternions;
- filtering the high-frequency component from the accelerometer readings in the world coordinate frame;
- finding a difference between the low-frequency component and a true gravity vector that is defined in the world coordinate frame; and
- using the difference to correct the drift-caused error in the gyroscope readings.

6. The method of claim 5, wherein said filtering comprises computing a Fourier spectrum of the accelerometer readings and removing the high-frequency component from the Fourier spectrum.

7. A computer program for causing a computer to perform the method according to any one of claims 4 to 6.

8. A computer-readable non-transitory storage medium, storing a computer code which, when executed by a processor, causes the processor to perform the method according to any one of claims 4 to 6.

## Patentansprüche

1. Vorrichtung (100) für eine Benutzertrajektorienschätzung in einem Drahtloskommunikationsnetzwerk, wobei die Vorrichtung umfasst:
einen Prozessor (102); und
einen Speicher (104), der an den Prozessor (102) gekoppelt ist und
prozessorausführbare Anweisungen (106) speichert,
wobei der Prozessor (102) konfiguriert ist, wenn die prozessorausführbaren Anweisungen (106) ausgeführt werden, zum:
- Empfangen (S202) von Eingangsdaten von einer Trägheitsmesseinheit, IMU, die in einer mobilen Benutzereinrichtung, UE, eingeschlossen ist, wobei die Eingangsdaten Messungen eines ersten Typs und Messungen eines zweiten Typs umfassen, wobei sich die Messungen des ersten Typs und die Messungen des zweiten Typs voneinander unterscheiden und in einem IMU-verknüpften Koordinatensystem vorgenommen werden;
- basierend auf den Messungen des ersten Typs oder den Messungen des zweiten Typs, Erhalten (S204) einer Darstellung einer Drehorientierung der IMU;
- Übertragen (S206) der Messungen des ersten Typs und der Messungen des zweiten Typs von dem IMU-verknüpften Koordinatensystem zu einem benutzerverknüpften Koordinatensystem;
- Bestimmen (S208) von Geschwindigkeitsvektoren der UE in dem benutzerverknüpften Koordinatensystem durch Verwenden eines vortrainierten neuronalen Netzwerks, NN (400), wobei das NN die Messungen des ersten Typs und die Messungen des zweiten Typs in dem benutzerverknüpften Koordinatensystem als Eingaben verwendet, wobei das NN eine Kombination eines ersten NN und eines zweiten NN umfasst, wobei das erste NN konfiguriert ist, um Merkmale aus den Messungen des ersten Typs und den Messungen des zweiten Typs in dem benutzerverknüpften Koordinatensystem für einen gegebenen Zeitraum zu extrahieren, wobei das zweite NN konfiguriert ist, um die extrahierten Merkmale aus dem ersten NN zu akkumulieren und den Geschwindigkeitsvektor der UE in dem benutzerverknüpften Koordinatensystem für den gegebenen Zeitraum zu erzeugen, wobei das erste NN als ein konvolutionelles NN mit einer oder mehreren Residualverbindungen konfiguriert ist, wobei das zweite NN als ein gated rekurrentes NN konfiguriert ist, und wobei jeder der Geschwindigkeitsvektoren eine UE-Verschiebung für den gegebenen Zeitraum anzeigt;
- Übertragen (S210) der Geschwindigkeitsvektoren von dem benutzerverknüpften Koordinatensystem zu einem Weltkoordinatensystem durch Verwenden der Darstellung der Drehorientierung der IMU; und
- Berechnen (S212) von Benutzertrajektorienkoordinaten durch Integrieren der Geschwindigkeitsvektoren in dem Weltkoordinatensystem;
wobei
die IMU eine Kombination aus einem Beschleunigungsmesser und einem Gyroskop umfasst;
die Messungen des ersten Typs Beschleunigungsmessermesswerte umfassen und die Messungen des zweiten Typs Gyroskopmesswerte umfassen, oder umgekehrt; und
der Prozessor (102) konfiguriert ist, um basierend auf den Gyroskopmesswerten die Darstellung der Drehorientierung der IMU als einen Satz von Drehquaternionen oder
Drehmatrizen zu erhalten (S204).

2. Vorrichtung (100) nach Anspruch 1, wobei die Beschleunigungsmessermesswerte eine Kombination aus einer Niedrigfrequenzkomponente, die einen Schwerkraftvektor anzeigt, und einer Hochfrequenzkomponente, die ein Gehen eines Benutzers anzeigt, umfassen, und wobei der Prozessor (102) ferner konfiguriert ist, um vor dem Übertragen (S206) der Messungen des ersten Typs und der Messungen des zweiten Typs einen durch Drift verursachten Fehler in den Gyroskopmesswerten zu korrigieren durch:
- Übertragen der Beschleunigungsmessermesswerte in das Weltkoordinatensystem durch Verwenden des Satzes von Drehquaternionen;
- Filtern der Hochfrequenzkomponente aus den Beschleunigungsmessermesswerten in dem Weltkoordinatensystem;
- Ermitteln einer Differenz zwischen der Niedrigfrequenzkomponente und einem wahren Schwerkraftvektor, der in dem Weltkoordinatensystem definiert ist; und
- Verwenden der Differenz, um den durch Drift verursachten Fehler in den Gyroskopmesswerten zu korrigieren.

3. Vorrichtung (100) nach Anspruch 2, wobei der Prozessor (102) konfiguriert ist, um das Filtern durch Kalkulieren eines Fourier-Spektrums für die Beschleunigungsmessermesswerte und ein Entfernen der Hochfrequenzkomponente aus dem Fourier-Spektrum durchzuführen.

4. Verfahren für die Benutzertrajektorienschätzung in einem
Drahtloskommunikationsnetzwerk, wobei das Verfahren umfasst:
- Empfangen (S202) von Eingangsdaten von einer Trägheitsmesseinheit, IMU, die in einer mobilen Benutzereinrichtung, UE, eingeschlossen ist, wobei die Eingangsdaten Messungen des ersten Typs und Messungen des zweiten Typs umfassen, wobei sich die Messungen des ersten Typs und die Messungen des zweiten Typs voneinander unterscheiden und in einem IMU-verknüpften Koordinatensystem vorgenommen werden;
- basierend auf den Messungen des ersten Typs oder den Messungen des zweiten Typs, Erhalten (S204) einer Darstellung der Drehorientierung der IMU;
- Übertragen (S206) der Messungen des ersten Typs und der Messungen des zweiten Typs von dem IMU-verknüpften Koordinatensystem zu einem benutzerverknüpften Koordinatensystem;
- Bestimmen (S208) von Geschwindigkeitsvektoren der UE in dem benutzerverknüpften Koordinatensystem durch Verwenden eines vortrainierten neuronalen Netzwerks, NN (400), wobei das NN die Messungen des ersten Typs und die Messungen des zweiten Typs in dem benutzerverknüpften Koordinatensystem als Eingaben verwendet, wobei das NN eine Kombination eines ersten NN und eines zweiten NN umfasst, wobei das erste NN konfiguriert ist, um Merkmale aus den Messungen des ersten Typs und den Messungen des zweiten Typs in dem benutzerverknüpften Koordinatensystem für einen gegebenen Zeitraum zu extrahieren, wobei das zweite NN konfiguriert ist, um die extrahierten Merkmale aus dem ersten NN zu akkumulieren und den Geschwindigkeitsvektor der UE in dem benutzerverknüpften Koordinatensystem für den gegebenen Zeitraum zu erzeugen, wobei das erste NN als ein konvolutionelles NN mit einer oder mehreren Residualverbindungen konfiguriert ist, wobei das zweite NN als ein gated rekurrentes NN konfiguriert ist, und wobei jeder der Geschwindigkeitsvektoren eine UE-Verschiebung für den gegebenen Zeitraum anzeigt;
- Übertragen (S210) der Geschwindigkeitsvektoren von dem benutzerverknüpften Koordinatensystem zu einem Weltkoordinatensystem durch Verwenden der Darstellung der Drehorientierung der IMU; und
- Berechnen (S212) von Benutzertrajektorienkoordinaten durch Integrieren der Geschwindigkeitsvektoren in dem Weltkoordinatensystem;
wobei
die IMU eine Kombination aus einem Beschleunigungsmesser und einem Gyroskop umfasst;
die Messungen des ersten Typs Beschleunigungsmessermesswerte umfassen und die Messungen des zweiten Typs Gyroskopmesswerte umfassen, oder umgekehrt; und das Erhalten (S204) das Erhalten, basierend auf den Gyroskopmesswerten, der Darstellung der Drehorientierung der IMU als einen Satz von Drehquaternionen oder Drehmatrizen umfasst.

5. Verfahren nach Anspruch 4, wobei die Beschleunigungsmessermesswerte eine Kombination aus einer Niedrigfrequenzkomponente, die einen Schwerkraftvektor anzeigt, und einer Hochfrequenzkomponente, die ein Gehen eines Benutzers anzeigt, umfassen, und wobei das Verfahren ferner, vor dem Übertragen (S206) der Messungen des ersten Typs und der Messungen des zweiten Typs, das Korrigieren eines durch Drift verursachten Fehlers in den Gyroskopmesswerten umfasst durch:
- Übertragen der Beschleunigungsmessermesswerte in das Weltkoordinatensystem durch Verwenden des Satzes von Drehquaternionen;
- Filtern der Hochfrequenzkomponente aus den Beschleunigungsmessermesswerten in dem Weltkoordinatensystem;
- Ermitteln einer Differenz zwischen der Niedrigfrequenzkomponente und einem wahren Schwerkraftvektor, der in dem Weltkoordinatensystem definiert ist; und
- Verwenden der Differenz, um den durch Drift verursachten Fehler in den Gyroskopmesswerten zu korrigieren.

6. Verfahren nach Anspruch 5, wobei das Filtern das Kalkulieren eines Fourier-Spektrums der Beschleunigungsmessermesswerte und das Entfernen der Hochfrequenzkomponente aus dem Fourier-Spektrum umfasst.

7. Computerprogramm zum Verursachen eines Computers, das Verfahren nach einem der Ansprüche 4 bis 6 durchzuführen.

8. Computerlesbares nichtflüchtiges Speicherungsmedium, das einen Computercode speichert, der, wenn durch einen Prozessor ausgeführt, den Prozessor veranlasst, das Verfahren nach einem der Ansprüche 4 bis 6 durchzuführen.

## Revendications

1. Appareil (100) permettant une estimation de trajectoire d'utilisateur dans un réseau de communication sans fil, l'appareil comprenant :
un processeur (102) ; et
une mémoire (104) couplée au processeur (102) et stockant des instructions exécutables par processeur (106),
dans lequel le processeur (102) est configuré, lors de l'exécution des instructions exécutables par processeur (106), pour :
- recevoir (S202) des données d'entrée en provenance d'une unité de mesure inertielle, IMU, incluse dans un équipement utilisateur, UE, mobile, les données d'entrée comprenant des mesures de premier type et des mesures de second type, les mesures de premier type et les mesures de second type étant différentes les unes des autres et prises dans un repère de coordonnées lié à l'IMU ;
- sur la base des mesures de premier type ou des mesures de second type, obtenir (S204) une représentation d'orientation de rotation de l'IMU ;
- transférer (S206) les mesures de premier type et les mesures de second type du repère de coordonnées lié à l'IMU à un repère de coordonnées lié à l'utilisateur ;
- déterminer (S208) des vecteurs de vitesse de l'UE dans le repère de coordonnées lié à l'utilisateur en utilisant un réseau neuronal, NN, pré-entraîné (400), le NN utilisant les mesures de premier type et les mesures de second type dans le repère de coordonnées lié à l'utilisateur en tant qu'entrées, le NN comprenant une combinaison d'un premier NN et d'un second NN, le premier NN étant configuré pour extraire des caractéristiques des mesures de premier type et des mesures de second type dans le repère de coordonnées lié à l'utilisateur pour une période donnée, le second NN étant configuré pour accumuler les caractéristiques extraites du premier NN et générer le vecteur de vitesse de l'UE dans le repère de coordonnées lié à l'utilisateur pour la période donnée, le premier NN étant configuré en tant que NN convolutif avec une ou plusieurs connexions résiduelles, le second NN étant configuré en tant que NN récurrent à portes, et chacun des vecteurs de vitesse indiquant un déplacement d'UE pour la période donnée ;
- transférer (S210) les vecteurs de vitesse du repère de coordonnées lié à l'utilisateur à un repère de coordonnées mondiales en utilisant la représentation d'orientation de rotation de l'IMU ; et
- calculer (S212) les coordonnées de trajectoire d'utilisateur en intégrant les vecteurs vitesse dans le repère de coordonnées mondiales ;
dans lequel
l'IMU comprend une combinaison d'un accéléromètre et d'un gyroscope ;
les mesures de premier type comprennent des relevés d'accéléromètre et les mesures de second type comprennent des relevés de gyroscope, ou vice versa ; et
le processeur (102) est configuré pour obtenir (S204), sur la base des relevés de gyroscope, la représentation d'orientation de rotation de l'IMU en tant qu'ensemble de quaternions de rotation ou de matrices de rotation.

2. Appareil (100) selon la revendication 1, dans lequel les relevés d'accéléromètre comprennent une combinaison d'une composante basse fréquence indiquant un vecteur de gravité et d'une composante haute fréquence indiquant la marche d'un utilisateur, et dans lequel le processeur (102) est en outre configuré, avant ledit transfert (S206) des mesures de premier type et des mesures de second type, pour corriger une erreur causée par la dérive dans les relevés de gyroscope en :
- transférant les relevés de l'accéléromètre dans le repère de coordonnées mondiales en utilisant l'ensemble des quaternions de rotation ;
- filtrant la composante haute fréquence à partir des relevés d'accéléromètre dans le repère de coordonnées mondiales ;
- trouvant une différence entre la composante basse fréquence et un vecteur de gravité réelle qui est défini dans le repère de coordonnées mondiales ; et
- utilisant la différence pour corriger l'erreur causée par la dérive dans les relevés de gyroscope.

3. Appareil (100) selon la revendication 2, dans lequel le processeur (102) est configuré pour réaliser ledit filtrage en calculant un spectre de Fourier pour les relevés d'accéléromètre et en retirant la composante haute fréquence du spectre de Fourier.

4. Procédé permettant une estimation de trajectoire d'utilisateur dans un réseau de communication sans fil, le procédé comprenant :
- la réception (S202) de données d'entrée en provenance d'une unité de mesure inertielle, IMU, incluse dans un équipement utilisateur, UE, mobile, les données d'entrée comprenant des mesures de premier type et des mesures de second type, les mesures de premier type et les mesures de second type étant différentes les unes des autres et prises dans un repère de coordonnées lié à l'IMU ;
- sur la base des mesures de premier type ou des mesures de second type, l'obtention (S204) d'une représentation d'orientation de rotation de l'IMU ;
- le transfert (S206) des mesures de premier type et des mesures de second type du repère de coordonnées lié à l'IMU à un repère de coordonnées lié à l'utilisateur ;
- la détermination (S208) de vecteurs de vitesse de l'UE dans le repère de coordonnées lié à l'utilisateur à l'aide d'un réseau neuronal, NN, pré-entraîné (400), le NN utilisant les mesures de premier type et les mesures de second type dans le repère de coordonnées lié à l'utilisateur en tant qu'entrées, le NN comprenant une combinaison d'un premier NN et d'un second NN, le premier NN étant configuré pour extraire des caractéristiques des mesures de premier type et des mesures de second type dans le repère de coordonnées lié à l'utilisateur pour une période donnée, le second NN étant configuré pour accumuler les caractéristiques extraites du premier NN et générer le vecteur de vitesse de l'UE dans le repère de coordonnées lié à l'utilisateur pour la période donnée, le premier NN étant configuré en tant que NN convolutif avec une ou plusieurs connexions résiduelles, le second NN étant configuré en tant que NN récurrent à portes, et chacun des vecteurs de vitesse indiquant un déplacement d'UE pour la période donnée ;
- le transfert (S210) des vecteurs de vitesse du repère de coordonnées lié à l'utilisateur à un repère de coordonnées mondiales en utilisant la représentation d'orientation de rotation de l'IMU ; et
- le calcul (S212) de coordonnées de trajectoire d'utilisateur en intégrant les vecteurs de vitesse dans le repère de coordonnées mondiales ;
dans lequel
l'IMU comprend une combinaison d'un accéléromètre et d'un gyroscope ;
les mesures de premier type comprennent des relevés d'accéléromètre et les mesures de second type comprennent des relevés de gyroscope, ou vice versa ; et
ladite obtention (S204) comprend l'obtention, sur la base des relevés de gyroscope, de la représentation d'orientation de rotation de l'IMU en tant qu'ensemble de quaternions de rotation ou de matrices de rotation.

5. Procédé selon la revendication 4, dans lequel les relevés d'accéléromètre comprennent une combinaison d'une composante basse fréquence indiquant un vecteur de gravité et d'une composante haute fréquence indiquant une marche d'un utilisateur, et dans lequel le procédé comprend en outre, avant ledit transfert (S206) des mesures de premier type et des mesures de second type, la correction d'une erreur causée par la dérive dans les relevés de gyroscope en :
- transférant les relevés de l'accéléromètre dans le repère de coordonnées mondiales en utilisant l'ensemble des quaternions de rotation ;
- filtrant la composante haute fréquence à partir des relevés d'accéléromètre dans le repère de coordonnées mondiales ;
- trouvant une différence entre la composante basse fréquence et un vecteur de gravité réelle qui est défini dans le repère de coordonnées mondiales ; et
- utilisant la différence pour corriger l'erreur causée par la dérive dans les relevés de gyroscope.

6. Procédé selon la revendication 5, dans lequel ledit filtrage comprend le calcul d'un spectre de Fourier des relevés d'accéléromètre et le retrait de la composante haute fréquence du spectre de Fourier.

7. Programme informatique permettant d'amener un ordinateur à réaliser le procédé selon l'une quelconque des revendications 4 à 6.

8. Support de stockage non transitoire lisible par ordinateur, stockant un code informatique qui, lorsqu'il est exécuté par un processeur, amène le processeur à réaliser le procédé selon l'une quelconque des revendications 4 à 6.
